# DEMANDE DE BREVET EUROPEEN

(11) **EP 1 453 169 A1**
(43) Date de publication de la demande: **01.09.2004**
(21) Numéro de dépôt: 04290533.1
(22) Date de dépôt: 26.02.2004
(51) Int. Cl.: H02G 7/04

(54) **Dispositif de serrage d'un câble aérien à un poteau**

(30) Priorité: 28.02.2003 FR 0302571
(71) Demandeur: FRANCE TELECOM SA, 75015 Paris (FR)
(72) Inventeur: Nonclercq, Bernard, 22450 Troguery (FR); Mercier, Francis, 22700 Louannec (FR); Henriot, Laurent, 22300 Ploumilliau (FR)
(74) Mandataire: Maillet, Alain

(57) **Abrégé**

La présente invention concerne un dispositif de serrage (100) d'un câble aérien (Ca) à un poteau (Ptl), le dispositif de serrage (100) comportant des mâchoires (120, 122) destinées à être disposées en vis-à-vis et aptes à enserrer, sous l'effet d'au moins un moyen de serrage (130), le câble (Ca).

Le dispositif de serrage (100) est remarquable en ce qu'il comporte des moyens prévus pour limiter le serrage du câble (Ca) de manière à autoriser le coulissement du câble (Ca) entre les mâchoires (120, 122) sous l'effet d'une contrainte de traction, d'un module supérieur à une valeur particulière, exercée par le câble (Ca) dans le dispositif de serrage (100).

Les risques de détérioration de matériel sont notablement atténués.

## Description

La présente invention se rapporte à un dispositif de serrage d'un câble aérien à un poteau, le dispositif de serrage comportant des mâchoires destinées à être disposées en vis-à-vis et aptes à enserrer, sous l'effet d'au moins un moyen de serrage, le câble. L'invention trouve, en particulier, des applications dans le domaine de la suspension des câbles aériens destinés aux télécommunications.

L'invention se rapporte également à une liaison filaire aérienne de télécommunication.

Dans certains lieux, par exemple dans les campagnes, les câbles destinés aux télécommunications sont suspendus aux faîtages de poteaux qui sont implantés le plus souvent le long des voies terrestres de communication.

Des dispositifs de fixation permettent la fixation des câbles aux poteaux. Ces dispositifs sont prévus pour permettre aux câbles de demeurer suspendus aux poteaux dans des conditions climatiques normales telles que, par exemple, une vitesse maximum du vent, une hauteur maximum d'enneigement.

Lorsque les conditions climatiques deviennent exceptionnellement mauvaises, ces dispositifs peuvent céder, ce qui a pour effet de libérer brutalement les câbles qui peuvent alors se détériorer et interrompre la continuité du service des télécommunications. Les câbles désolidarisés des poteaux peuvent également constituer un danger pour la circulation lorsqu'ils tombent sur les voies terrestres de communication. Lorsque les dispositifs de fixation ne cèdent pas, cela peut soit, conduire le câble à se rompre sous la contrainte de traction qu'il subit ou soit, conduire les poteaux à se briser.

On a donc cherché à concevoir un dispositif de fixation qui puisse provoquer, lors de conditions climatiques extrêmes, le largage du câble afin de provoquer, sous l'effet de la gravité, sa chute sur le sol afin d'éviter sa détérioration et, par là même, garantir la continuité du service des télécommunications. Ce dispositif de fixation à largage intervient, en particulier, lors de la chute de branches sur le câble. Un tel dispositif de fixation à largage peut être constitué, par exemple, par un boulon dont la rupture intervient à un seuil de contrainte déterminé, par un anneau non fermé apte à s'ouvrir sous une charge connue, par un mécanisme à pression contrôlée tel qu'une rondelle-ressort apte à libérer un mécanisme de blocage ou par un mécanisme à friction comportant des garnitures et prévu pour retenir le câble jusqu'à un seuil de contrainte particulier, un mécanisme à encliquetage à billes.

L'inconvénient majeur de ces dispositifs de fixation à largage est que compte tenu que les câbles tombent sur le sol, ils peuvent constituer, là encore, un danger pour la circulation. Par ailleurs, la détection à distance d'un câble tombé est difficile à mettre en oeuvre. Il faut également prévoir de suspendre à nouveau les câbles aux poteaux, soit par de nouveaux dispositifs, s'ils ne sont pas de type à réarmement, soit en réarmant les dispositifs en place.

Aussi, afin de palier à ces inconvénients, on a conçu un système de suspension qui puisse éviter la chute du câble au sol.

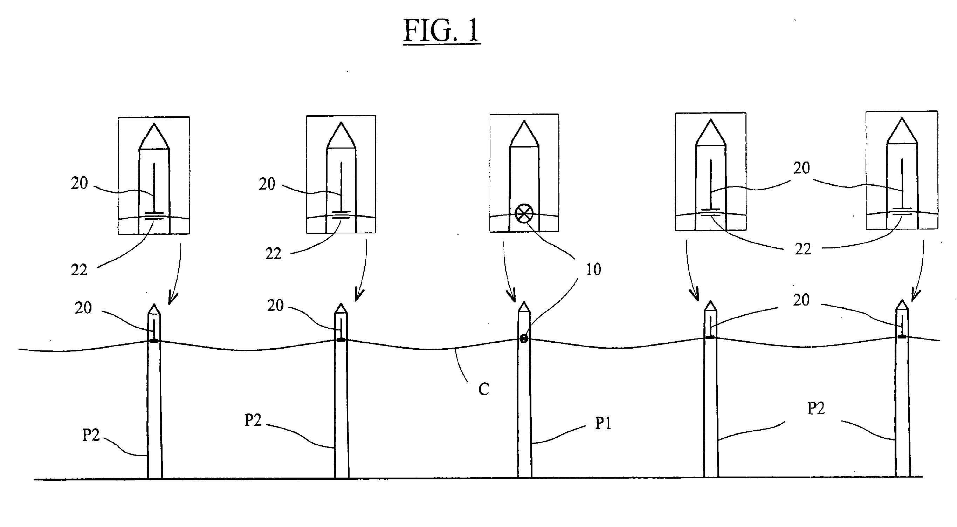

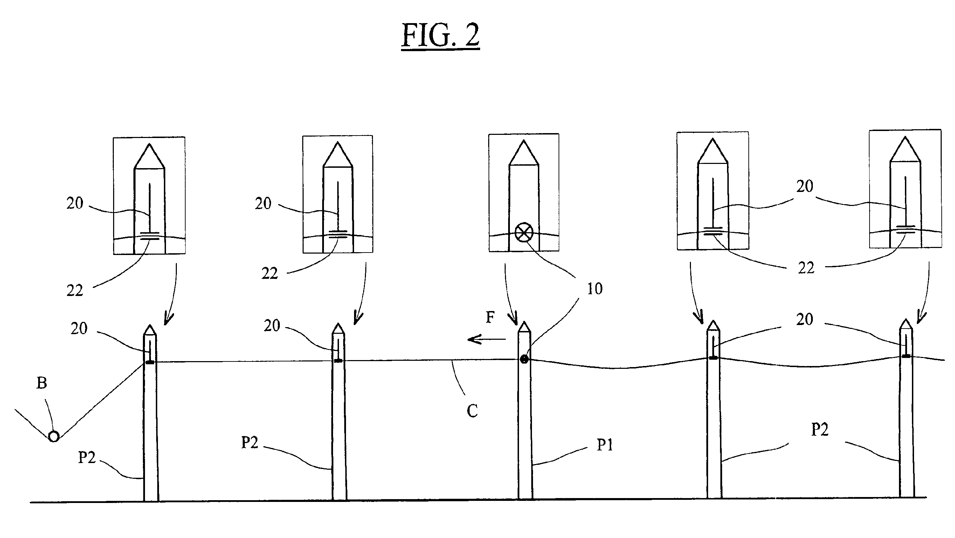

Un tel système comprend, à la Fig. 1, un dispositif de bridage 10 et des crochets coulissants 20. Deux dispositifs de bridage 10 consécutifs sont fixés respectivement aux faîtages de deux poteaux P1 séparés par une pluralité de poteaux P2 disposés les uns à la suite des autres et aux faîtages desquels sont fixés des crochets coulissants 20. Aux Figs. 1 et 2, un seul dispositif de bridage 10 est représenté. Les dispositifs de bridage 10 sont prévus pour permettre la fixation d'un câble C aux poteaux P1 alors que les crochets coulissants 20 permettent la suspension du câble C aux poteaux P2 en autorisant un coulissement longitudinal du câble C dans des oeillets 22 prévus respectivement dans lesdits crochets coulissants 20.

Ainsi, à la Fig. 2, lorsqu'un objet, tel qu'un arbre ou une branche d'arbre B s'abat sur une portée du câble C, celui-ci peut coulisser dans les différents oeillets 22 des crochets coulissants 20 disposés entre deux dispositifs de bridage 10 disposés de part et d'autre de la portée sollicitée et ceci jusqu'à ce que le câble C soit tendu entre ces deux dispositifs de bridage 10. La tension dans le câble C est notamment atténuée lors de l'impact par cette possibilité de coulissement du câble C dans les crochets coulissants 20. Par ailleurs, le câble C demeure suspendu aux poteaux et ne constitue plus un danger.

Cependant, la contrainte de traction subie par le câble C sous l'effet de la masse de l'objet B soutenue par ladite portée est transmise, aux poteaux P1 par l'intermédiaire de leurs dispositifs de bridage 10 qui subissent alors une contrainte de flexion. Cette contrainte est matérialisée, à la Fig. 2, par la flèche F. Si son intensité devient trop importante, elle peut endommager ou détruire les dispositifs de bridage 10 ou bien parvenir à briser les poteaux P1.

Aussi, le but de l'invention est de proposer, en particulier, un dispositif de fixation d'un câble aérien à un poteau qui puisse palier à ces inconvénients.

A cet effet, est proposé un dispositif de serrage d'un câble aérien à un poteau, le dispositif de serrage comportant des mâchoires destinées à être disposées en vis-à-vis et aptes à enserrer, sous l'effet d'au moins un moyen de serrage, le câble, le dispositif de serrage étant remarquable en ce qu'il comporte des moyens prévus pour limiter le serrage du câble de manière à autoriser le coulissement du câble entre les mâchoires sous l'effet d'une contrainte de traction, d'un module supérieur à une valeur particulière, exercée par le câble dans le dispositif de serrage.

Ainsi, les risques de détérioration de matériel sont notablement atténués.

Selon une caractéristique additionnelle de l'invention, ledit ou chaque moyen de serrage est constitué d'une vis traversant transversalement le dispositif de serrage et d'un écrou à couple de serrage calibré monté sur l'extrémité libre de ladite vis.

Selon une caractéristique additionnelle de l'invention, ledit ou chaque moyen de serrage est constitué d'une vis traversant transversalement le dispositif de serrage, d'une bague élastique et d'un écrou montés sur l'extrémité libre de la vis.

Selon une caractéristique additionnelle de l'invention, chaque mâchoire comporte au moins un évidement apte à envelopper partiellement le câble, ledit ou chaque évidement comportant des protubérances destinées à limiter la surface de contact de chaque mâchoire avec le câble.

Selon une caractéristique additionnelle de l'invention, les protubérances sont constituées de portions de cylindres.

Selon une caractéristique additionnelle de l'invention, les protubérances sont constituées de bourrelets de section semi-cylindrique.

Selon une caractéristique additionnelle de l'invention, les mâchoires sont fabriquées dans un matériau élastomère afin d'obtenir un coefficient de frottement important entre celles-ci et le câble.

Selon une caractéristique additionnelle de l'invention, les protubérances sont disposées sur les mâchoires de telle manière qu'elles peuvent céder sous l'effet de contraintes de cisaillement trop importantes causées par la traction du câble dans le dispositif de serrage.

Selon une caractéristique additionnelle de l'invention, le dispositif de serrage comporte une entretoise disposée entre des supports sur lesquels sont montées respectivement les mâchoires pour limiter le niveau des contraintes de serrage exercées par les mâchoires sur le câble.

Une liaison filaire aérienne de télécommunication comprenant des poteaux d'un premier type aux faîtages desquels sont montés respectivement des dispositifs de serrage d'un câble aérien précédemment décrits, est également proposée.

Selon une caractéristique de l'invention, la liaison comprend, des poteaux d'un second type aux faîtages desquels sont montés des crochets coulissants pour ledit câble aérien, chaque poteau du premier type étant disposé entre deux séries de poteaux voisins du second type.

Selon une caractéristique additionnelle de l'invention, le nombre de poteaux du second type d'une même série est compris entre 3 et 6.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue d'une portion d'un câble aérien suspendu à des poteaux par des moyens connus selon l'état de la technique,
la Fig. 2 représente une vue d'une portion d'un câble aérien suspendu à des poteaux par des moyens connus identiques à la Fig. 1 et dont une portée est accidentellement sollicitée,
la Fig. 3 représente une vue d'une portion d'une liaison filaire aérienne de télécommunication selon l'invention,
la Fig. 4 représente une vue de face d'un crochet coulissant monté sur un poteau pour une liaison filaire aérienne de télécommunication selon l'invention,
la Fig. 5 représente une vue en coupe transversale d'un type de câble pour une liaison filaire aérienne de télécommunication selon l'invention,
la Fig. 6 représente une vue latérale d'un dispositif de serrage d'un câble pour une liaison filaire aérienne de télécommunication selon l'invention,
la Fig. 7 représente une vue d'une première variante de réalisation d'un dispositif de serrage d'un câble pour une liaison filaire aérienne de télécommunication selon l'invention,
la Fig. 8 représente une vue en coupe longitudinale d'une variante de réalisation des mâchoires d'une seconde variante de réalisation d'un dispositif de serrage d'un câble pour une liaison filaire aérienne de télécommunication selon l'invention,
la Fig. 9 représente une vue d'une seconde variante de réalisation d'un dispositif de serrage d'un câble pour une liaison filaire aérienne de télécommunication selon l'invention, et
la Fig. 10 représente une vue d'une portion d'une liaison filaire aérienne de télécommunication et dont une portée est accidentellement sollicitée selon l'invention.

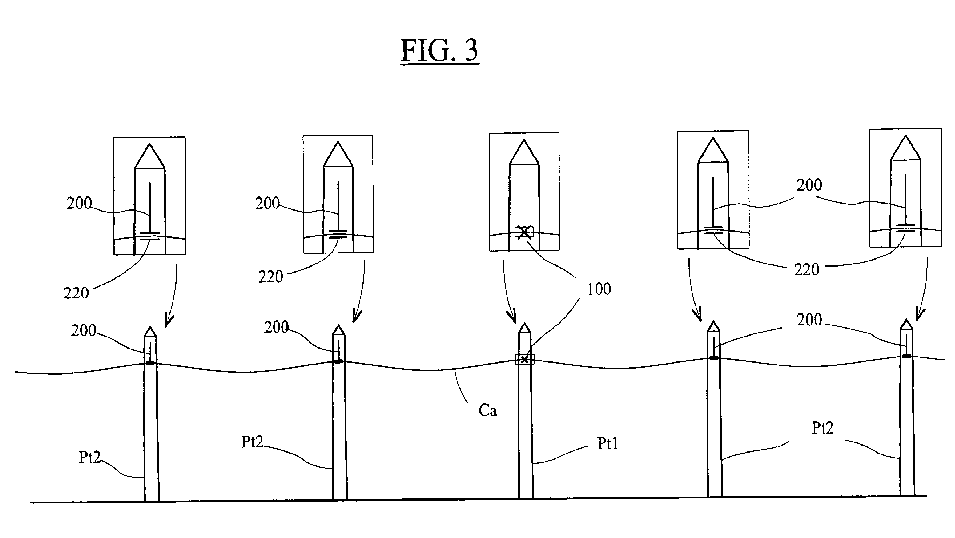

A la Fig. 3, on a représenté une portion d'une liaison filaire aérienne de télécommunication et qui comprend un câble Ca suspendu à intervalles réguliers à des poteaux Pt1, Pt2 par l'intermédiaire d'un système de suspension constitué de dispositifs de serrage 100 et de crochets coulissants 200. A la Fig. 3, un seul dispositif de serrage 100 est représenté.

Chaque dispositif de serrage 100 est fixé au faîtage d'un poteau Pt1 disposé entre deux séries de poteaux Pt2 voisins et aux faîtages desquels sont fixés des crochets coulissants 200.

Le nombre de poteaux Pt2 d'une même série peut, par exemple, être compris entre 3 et 6.

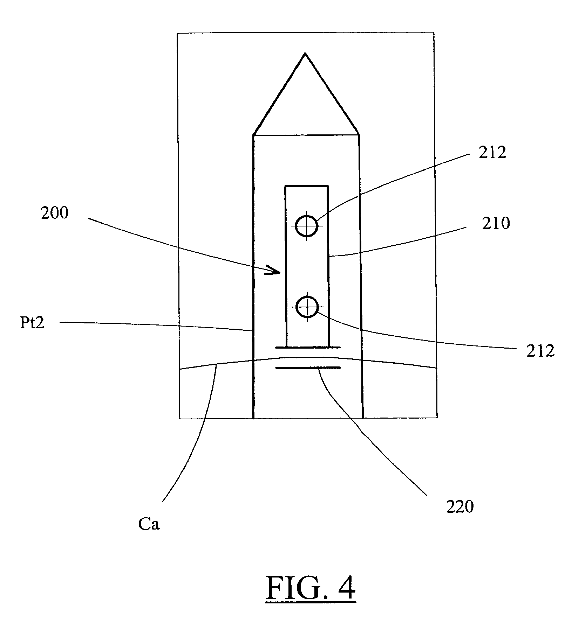

A la Fig. 4, chaque crochet coulissant 200 est constitué d'un montant 210 apte à être fixé contre un poteau Pt2, par exemple, à l'aide de boulons 212, et d'un support 220 autorisant un déplacement par coulissement du câble Ca suivant une direction sensiblement perpendiculaire à l'axe du poteau Pt2.

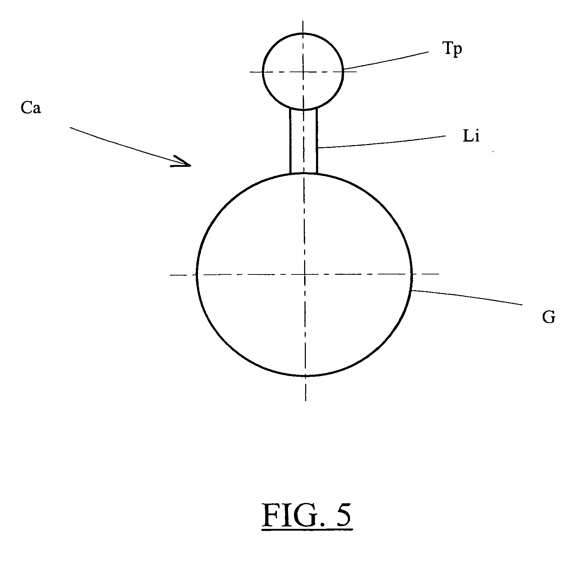

A la Fig. 5, le câble Ca mis en oeuvre dans l'invention est, de préférence, de type à structure à porteur excentré. Il est constitué d'un toron porteur Tp formé d'un filin d'acier gainé et qui est raccordé radialement, par l'intermédiaire d'une languette de liaison Li, à une gaine G contenant des moyens de transport des signaux (fils, fibres optiques, etc).

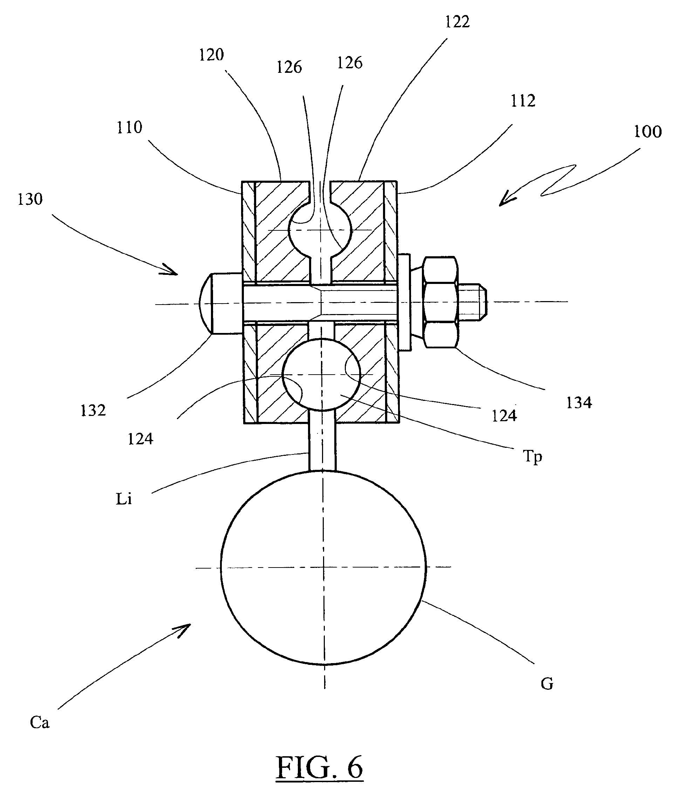

A la Fig. 6, le dispositif de serrage 100 est constitué de supports 110, 112 sur lesquels sont montées respectivement des mâchoires 120, 122, qui sont par exemple assemblées aux supports 110, 112 par collage, et qui sont destinées à être disposées en vis-à-vis et prévues pour enserrer, sous l'effet d'au moins un moyen de serrage 130, un câble aérien d'une liaison filaire aérienne de télécommunication et, en particulier, le toron porteur Tp d'un câble Ca tel que celui décrit à la Fig. 5. Dans les exemples de réalisation décrits aux Figs. 3, 4 et aux Figs. 6 à 10, seul ce type de câble est décrit.

A la Fig. 6, les mâchoires 120, 122 sont, à cet effet, pourvues d'évidements 124 réalisés longitudinalement sur leurs faces disposées en vis-à-vis et qui sont destinés à former une empreinte dont la géométrie est complémentaire à celle d'un toron porteur Tp. A cette Fig. 6, les mâchoires 120, 122 sont pourvues d'autres évidements 126 disposés parallèlement aux premiers et qui forment une seconde empreinte dont la taille est inférieure à celle de la première empreinte afin de permettre, par simple rotation du dispositif de serrage 100, le serrage d'un autre type de câble de section différente sur un poteau.

Ledit ou chaque moyen de serrage 130 est constitué d'un boulon qui comprend une vis 132 traversant transversalement le dispositif de serrage 100 et à l'extrémité libre de laquelle peuvent être montés différents moyens. La vis 132 peut présenter une longueur suffisante de manière à permettre également la fixation du dispositif de serrage 100 contre un poteau, non représenté à cette Fig. 6.

Le dispositif de serrage 100 comporte des moyens prévus pour limiter le serrage du câble Ca de manière à autoriser le coulissement de celui-ci entre les mâchoires 120, 122 sous l'effet d'une traction du câble Ca dans le dispositif de serrage 100, lorsque le module de la force de traction dépasse un seuil déterminé.

A titre d'illustration, la valeur choisie du seuil peut être comprise entre 100 et 150 daN et, en tout état de cause, doit être inférieure à une valeur d'une contrainte de flexion, de l'ordre de 200 daN, susceptible de faire rompre un poteau lorsque cette contrainte est appliquée au faîtage du poteau.

Ainsi, à la Fig. 6, un écrou 134 à couple de serrage calibré, tel qu'un écrou pourvu d'une membrane frangible, complète le moyen de serrage 130. Il est monté sur l'extrémité libre de la vis 132 de manière à permettre lors de son serrage complet sur la vis 132, l'application de forces déterminées de même module et de directions contraires contre les supports 110 et 112, si bien que les forces exercées par les mâchoires 120 et 122 sur le toron porteur Tp atteignent, elles aussi, une valeur déterminée. On peut de la sorte choisir un écrou 134 dont la valeur du couple de serrage calibré autorise le coulissement du toron porteur Tp dans les mâchoires 120, 122 sous l'action d'un effort de traction, dont le module est supérieur à une valeur particulière, exercé entre le câble Ca et le dispositif de serrage 100.

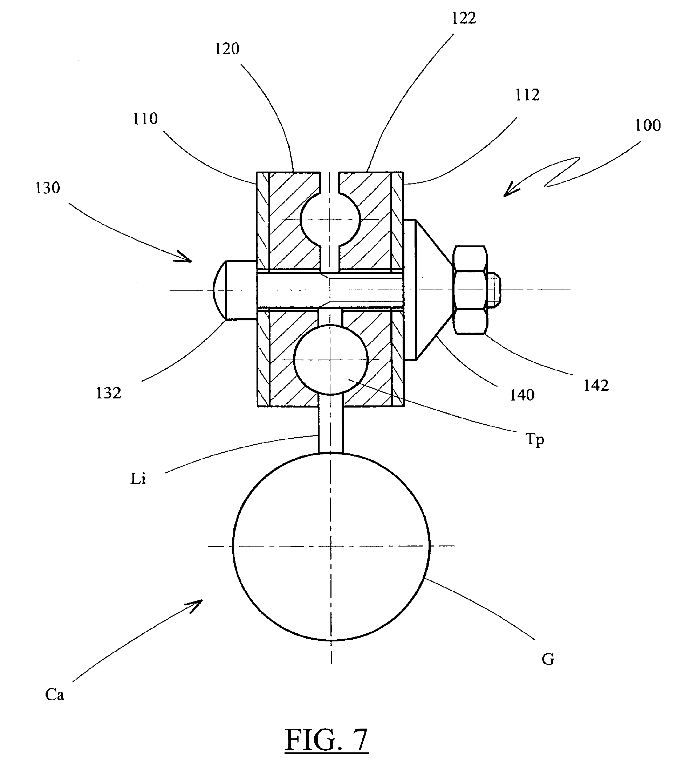

Dans une première variante de réalisation du dispositif de serrage 100 représentée à la Fig. 7 et en remplacement de l'écrou 134 décrit précédemment, une bague élastique 140 et un écrou 142 sont montés sur l'extrémité libre de la vis 132 permettant ainsi un contrôle du serrage précis de l'effort de serrage des mâchoires 120, 122 sur le toron porteur Tp. La bague élastique 140 peut, par exemple, être constituée par une rondelle de type "Belleville" ou de type "Grower".

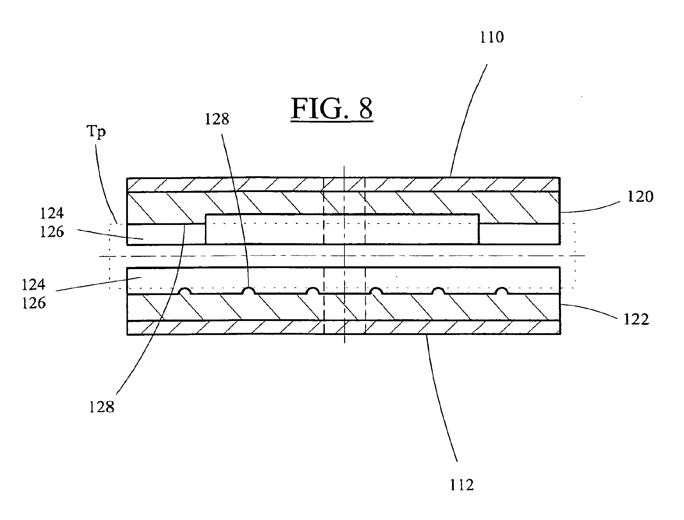

A la Fig. 8, et dans une variante de réalisation des mâchoires 120, 122, les évidements 124, 126 comportent des protubérances 128 destinées à limiter la surface de contact des mâchoires 120, 122 avec le toron porteur Tp afin d'obtenir une pression de contact plus importante pour un même effort de serrage appliqué aux mâchoires 120, 122. On peut ainsi proposer des dispositifs de serrage qui, pour un même effort de serrage appliqué aux mâchoires 120, 122 sont aptes, par simple remplacement desdites mâchoires, à autoriser le coulissement de torons porteurs Tp suivants plusieurs seuils de contraintes de traction exercées dans lesdits torons Tp.

Les protubérances 128 peuvent être constituées de portions de cylindres telles que celles représentées sur la mâchoire 120 ou de bourrelets de section semi-cylindrique tels que ceux représentés sur la mâchoire 122.

Les mâchoires 120, 122 sont fabriquées, de préférence, dans un matériau élastomère afin d'obtenir un coefficient de frottement important entre celles-ci et le toron porteur Tp. De telles mâchoires 120, 122 permettent également de tolérer des variations de dimensionnement du toron porteur Tp sous l'effet de changements de conditions climatiques, sans modifier notablement ses caractéristiques de retenue du toron porteur Tp.

Dans cette hypothèse, les protubérances 128 peuvent être disposées sur les mâchoires 120, 122 de telle manière qu'elles peuvent céder sous l'effet de contraintes de cisaillement trop importantes causées par la traction du toron porteur Tp dans le dispositif de serrage 100 et ainsi obliger à leurs remplacements.

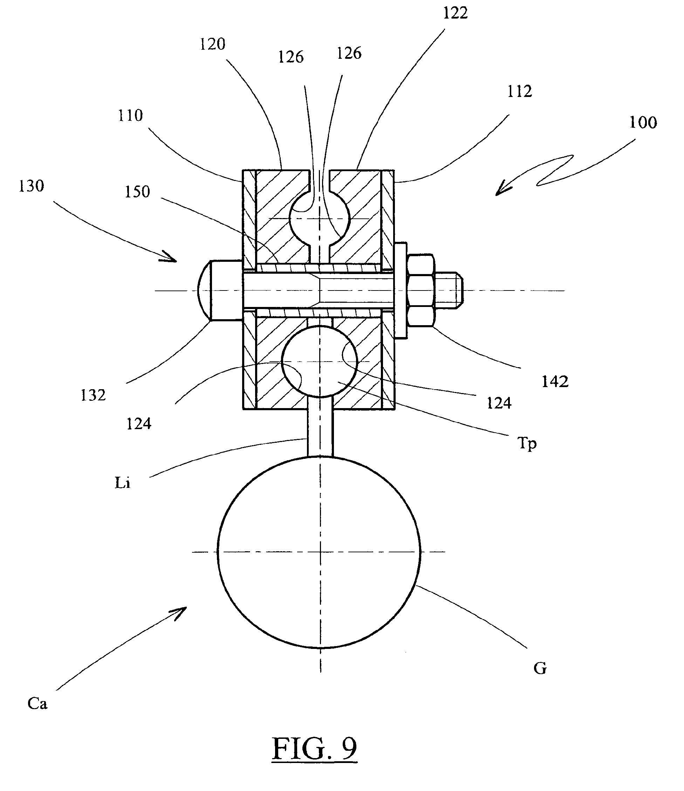

Par ailleurs, et toujours dans l'hypothèse de mâchoires 120, 122 fabriquées dans un matériau élastomère, le dispositif de serrage 100 comporte, dans une seconde variante de réalisation représentée à la Fig. 9, au moins une entretoise 150 disposée entre les deux supports 110 et 112. Ladite ou chaque entretoise 150 qui forme ainsi une butée entre les deux supports 110 et 112 est destinée, à l'issue du vissage du moyen de serrage 130, à limiter le niveau des contraintes de serrage exercées par les mâchoires 120, 122 sur le toron porteur Tp. De préférence, ladite ou chaque entretoise 150 est creuse permettant ainsi son montage autour d'une vis 132. L'entretoise 150 peut être conçue suivant différentes longueurs afin que l'on puisse adapter le niveau maximum des contraintes de serrage des mâchoires 120, 122 sur le toron porteur Tp à des exigences particulières.

Les mâchoires 120, 122 peuvent également être fabriquées dans un matériau métallique. Chaque support 110, 112 et sa mâchoire 120, 122 correspondante peuvent être conçus en une seule pièce.

Le fonctionnement du dispositif de serrage 100 de l'invention s'opère de la manière suivante. Des dispositifs de serrage 100 et des crochets coulissants 200 sont fixés aux faîtages de poteaux Pt1 et Pt2. Les dispositifs de serrage 100 seront disposés sur les poteaux Pt1 de manière à ce que l'axe dudit ou de chaque évidement 124, 126 soit disposé horizontalement. Le câble Ca est monté dans les supports 220 des crochets coulissants 200, et le toron porteur Tp du câble Ca est monté entre les mâchoires 120 et 122 préalablement écartées. Celles-ci sont ensuite rapprochées puis serrées, par l'intermédiaire des moyens de serrage 130, contre le toron porteur Tp.

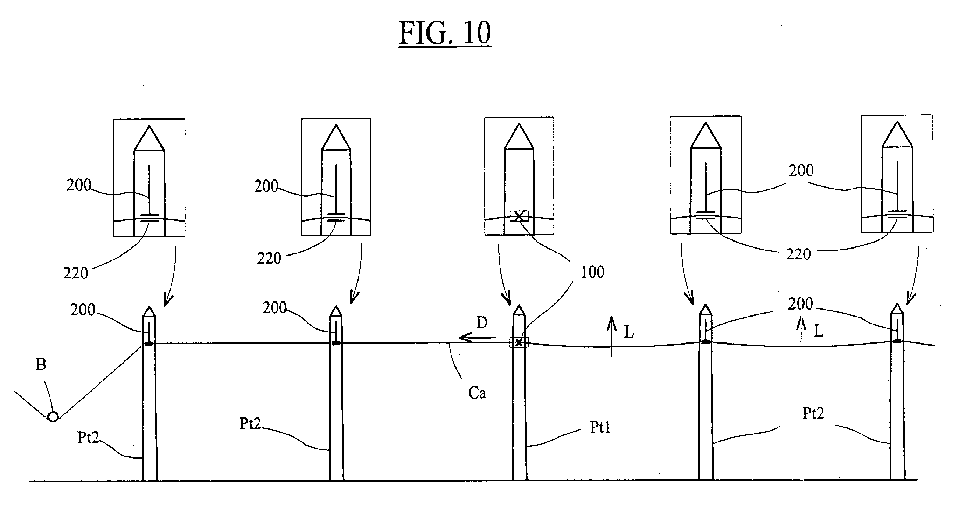

A la Fig. 10, lorsqu'un objet, tel qu'un arbre ou une branche d'arbre B s'abat sur une portée du câble Ca, celui-ci peut coulisser dans les différents supports 220 des crochets coulissants 200. Si la contrainte de traction dans le câble Ca atteint un seuil déterminé, celui-ci peut alors coulisser dans les deux dispositifs de serrage 100 disposés de part et d'autre de la portée sollicitée, suivant en cela une trajectoire matérialisée par la flèche D à la Fig. 10. Une certaine longueur de câble Ca disposée en amont de chaque dispositif de serrage 100 est alors tirée en aval de ces deux dispositifs de serrage 100 disposés de part et d'autre de la portée sollicitée par l'objet B. La tension accrue du câble Ca des portées amont qui en résulte engendre une diminution des flèches L dans ces portées et permet, par le coulissement du câble Ca dans les crochets coulissants 200, de fournir une longueur supplémentaire de câble Ca entre ces deux dispositifs de serrage 100 qui est telle que le niveau de contrainte de traction dans le câble Ca puisse s'abaisser sous le seuil déterminé. Si tel n'est toujours pas le cas, d'autres dispositifs de serrage 100 disposés plus loin peuvent être amenés à autoriser le coulissement du câble Ca si bien que la longueur supplémentaire de câble Ca qui est tirée entre les deux dispositifs de serrage 100 disposés de part et d'autre de la portée sollicitée peut être suffisante pour amener le câble Ca à venir en contact avec le sol sous la contrainte de l'objet B. Le coulissement du câble Ca est alors interrompu dans les dispositifs de serrage 100.

Le dispositif de serrage de l'invention permet de réduire la probabilité de pannes de liaisons filaires aériennes de télécommunication, notamment lorsque les conditions climatiques sont exceptionnellement mauvaises.

Il permet également la réduction des interventions de maintenance et en diminue le coût en limitant la destruction de certains composants.

## Revendications

1. Dispositif de serrage (100) d'un câble aérien (Ca) à un poteau (Pt1), le dispositif de serrage (100) comportant des mâchoires (120, 122) destinées à être disposées en vis-à-vis et aptes à enserrer, sous l'effet d'au moins un moyen de serrage (130), le câble (Ca), le dispositif de serrage (100) comportant des moyens prévus pour limiter le serrage du câble (Ca) de manière à autoriser le coulissement du câble (Ca) entre les mâchoires (120, 122) sous l'effet d'une contrainte de traction, d'un module supérieur à une valeur particulière, exercée par le câble (Ca) dans le dispositif de serrage (100), **caractérisé en ce que** ledit ou chaque moyen de serrage (130) est constitué d'une vis (132) traversant transversalement le dispositif de serrage (100) et d'un écrou (134) à couple de serrage calibré monté sur l'extrémité libre de ladite vis (132).

2. Dispositif de serrage (100) selon la revendication 1, **caractérisé en ce que** chaque mâchoire (120, 122) comporte au moins un évidement (124, 126) apte à envelopper partiellement le câble (Ca), ledit ou chaque évidement (124, 126) comportant des protubérances (128) destinées à limiter la surface de contact de chaque mâchoire (120, 122) avec le câble (Ca).

3. Dispositif de serrage (100) selon la revendication 2, **caractérisé en ce que** les protubérances (128) sont constituées de portions de cylindres.

4. Dispositif de serrage (100) selon la revendication 2, **caractérisé en ce que** les protubérances (128) sont constituées de bourrelets de section semi-cylindrique.

5. Dispositif de serrage (100) selon l'une quelconque des revendications précédentes, **caractérisé en ce que** les mâchoires (120, 122) sont fabriquées dans un matériau élastomère afin d'obtenir un coefficient de frottement important entre celles-ci et le câble (Ca).

6. Dispositif de serrage (100) selon la revendication 5, **caractérisé en ce que** les protubérances (128) sont disposées sur les mâchoires (120, 122) de telle manière qu'elles peuvent céder sous l'effet de contraintes de cisaillement trop importantes causées par la traction du câble (Ca) dans le dispositif de serrage (100).

7. Dispositif de serrage (100) selon la revendication 5 ou 6, **caractérisé en ce qu'**il comporte une entretoise (150) disposée entre des supports (110, 112) sur lesquels sont montées respectivement les mâchoires (120, 122) pour limiter le niveau des contraintes de serrage exercées par les mâchoires (120, 122) sur le câble (Ca).

8. Liaison filaire aérienne de télécommunication comprenant des poteaux (Pt1) aux faîtages desquels sont montés respectivement des dispositifs de serrage (100) d'un câble aérien (Ca), le dispositif de serrage (100) comportant des mâchoires (120, 122) destinées à être disposées en vis-à-vis et aptes à enserrer, sous l'effet d'au moins un moyen de serrage (130), le câble (Ca), le dispositif de serrage (100) comportant des moyens prévus pour limiter le serrage du câble (Ca) de manière à autoriser le coulissement du câble (Ca) entre les mâchoires (120, 122) sous l'effet d'une contrainte de traction, d'un module supérieur à une valeur particulière, exercée par le câble (Ca) dans le dispositif de serrage (100), **caractérisée en ce que** ledit ou chaque moyen de serrage (130) est constitué d'une vis (132) traversant transversalement le dispositif de serrage (100) et d'un écrou (134) à couple de serrage calibré monté sur l'extrémité libre de ladite vis (132).

9. Liaison filaire aérienne de télécommunication selon la revendication 8, **caractérisée en ce qu'**elle comprend, des poteaux (Pt2) aux faîtages desquels sont montés des crochets coulissants (200) pour ledit câble aérien (Ca), chaque poteau (Pt1) étant disposé entre deux séries de poteaux (Pt2) voisins.

10. Liaison filaire aérienne de télécommunication selon la revendication 9, **caractérisée en ce que** le nombre de poteaux (Pt2) d'une même série est compris entre 3 et 6.
